# EUROPÄISCHE PATENTANMELDUNG

(11) **EP 1 544 496 A2**
(43) Veröffentlichungstag der Anmeldung: **22.06.2005**
(21) Anmeldenummer: 04029289.8
(22) Anmeldetag: 10.12.2004
(51) Int. Cl.: F16F 1/362

(54) **Elastisches Verbindungselement**

(30) Priorität: 18.12.2003 DE 10359515
(71) Anmelder: DaimlerChrysler AG, 70567 Stuttgart (DE)
(72) Erfinder: Essig, Oliver, Dr., 71364 Winnenden (DE); Schnur, Jürgen, 71254 Ditzingen (DE); Tomaschko, Silvia, Dr., 89075 Ulm (DE); Wessels, Dieter, 71686 Remseck (DE)

(57) **Zusammenfassung**

Ein elastisches Verbindungselement (14) zum Verbinden von wenigstens zwei Bauteilen (10, 10', 12, 12') weist jeweils eine Befestigungsvorrichtung (18, 30, 32) zum Befestigen des Verbindungselements an eines der Bauteile auf und ist aus einem Metalldrahtgestrick (20) aufgebaut, das in ein Formelement gepresst ist, wobei die Befestigungsvorrichtungen (18, 30, 32) derart in das Verbindungselement (14) integriert sind, dass die Richtung der Befestigung des Verbindungselements an die Bauteile im wesentlichen senkrecht zu der Hauptausdehnungsrichtung des Verbindungselement verläuft. Dieses Verbindungselement (14) kann vorteilhaft zum Beispiel zwischen Bauteilen eines Kraftfahrzeugmotors angeordnet werden, um die Festigkeit und das Körperschallübertragungsverhalten der Verbindung zwischen den beiden Bauteilen zu verbessern.

## Beschreibung

Die vorliegende Erfindung betrifft ein elastisches Verbindungselement zum Verbinden von wenigstens zwei Bauteilen nach dem Oberbegriff des Anspruchs 1.

Im Bereich der Kraftfahrzeugtechnik müssen im allgemeinen verschiedene Motorkomponenten (Bauteile der Erfindung) fest und gleichzeitig elastisch miteinander verbunden werden. Hierbei sollen die Verbindungen eine hohe Festigkeit, insbesondere Schwingfestigkeit und Temperaturfestigkeit sowie gute Körperschallübertragungseigenschaften aufweisen.

Es ist daher eine Aufgabe der vorliegenden Erfindung, ein elastisches Verbindungselement zum Verbinden von wenigstens zwei Bauteilen vorzusehen, welches gute Elastizitäts-, Festigkeits- sowie Körperschallübertragungseigenschaften aufweist.

Diese Aufgabe wird durch ein elastisches Verbindungselement mit den Merkmalen des Anspruchs 1 gelöst. Vorteilhafte Ausgestaltungen und Weiterbildungen der Erfindung sind Gegenstand der Unteransprüche 2 bis 10.

Das elastische Verbindungselement zum Verbinden von wenigstens zwei Bauteilen weist jeweils eine Befestigungsvorrichtung zum Befestigen des Verbindungselements mit einem der Bauteile auf und ist aus einem Metalldrahtgestrick aufgebaut, das in ein Formelement gepresst ist, wobei die Befestigungsvorrichtungen derart in das Verbindungselement integriert sind, dass die Richtung der Befestigung des Verbindungselements an die Bauteile im wesentlichen senkrecht zu der Hauptausdehnungsrichtung des Verbindungselements verläuft.

Das Metalldrahtgestrick gewährleistet aufgrund der seiner Konstruktion inhärenten Coulomb'schen Reibung eine hohe Schwingungsdämpfung (akustisch und schwingungstechnisch) zwischen den wenigstens zwei Bauteilen und verbessert hierdurch das Schwingverhalten der gesamten Baugruppe. Darüber hinaus zeigt das Metalldrahtgestrick eine hohe Temperatur- und Korrosionsfestigkeit, eine ausreichende Elastizität und ein hohes Energieabsorptionsvermögen, sodass es insbesondere auch zur Verbindung von Komponenten eines Kraftfahrzeugmotors gut geeignet ist.

In einer Ausgestaltung der Erfindung besitzt das Formelement eine balkenartige oder plattenartige Grundform. Diese Grundform kann sowohl geradlinig als auch gekrümmt gewählt sein.

In einer bevorzugten Ausführungsform ist das Metalldrahtgestrick einseitig oder beidseitig mit einer Deckschicht aus einem metallischen oder nicht-metallischen Material versehen. Mittels dieser Deckschichten kann das Schwing- und Übertragungsverhalten über weite Frequenzbereiche gezielt beeinflusst werden. Im Fall der Verwendung eines Elastomers für die Deckschichten wird das Dämpfungsverhalten durch Scherung erzeugt.

In einer alternativen Ausführungsform sind zwei Metalldrahtgestricke vorgesehen, zwischen denen eine Einlage vorgesehen ist, oder das Metalldrahtgestrick ist mit einer Füllung versehen, wobei die Einlage bzw. die Füllung aus einem metallischen oder nicht-metallischen Material, vorzugsweise einem elastomeren Material besteht. Auch in diesem Fall kann das Schwing- und Übertragungsverhalten des Verbindungselements über beide Frequenzbereiche gezielt beeinflusst werden.

In einer weiteren alternativen Ausführungsform der Erfindung ist das Metalldrahtgestrick einseitig oder beidseitig mit einer tragenden Montageplatte verbunden. Diese Montageplatten erhöhen die Festigkeit bzw. Stabilität der Verbindung.

Die Befestigungsvorrichtungen des elastischen Verbindungselements können Buchsen, Hülsen oder Durchbohrungen sein, durch welche ein Befestigungselement, wie beispielsweise eine Schraube oder eine Niete, zum Eingriff mit dem Bauteil hindurch geführt werden kann.

Das Verbindungselement der Erfindung ist besonders bevorzugt bei einer Anordnung aus wenigstens zwei miteinander verbundenen Bauteilen einsetzbar, welche Bauteile eines Motorsystems eines Kraftfahrzeugs sind.

Je nach Form des zu verbindenden Bauteils kann ferner zwischen dem Bauteil und dem Verbindungselement ein Kupplungselement zum formschlüssigen Anschluss von Bauteil und Verbindungselement vorgesehen sein.

Weitere Merkmale und Merkmalskombinationen ergeben sich aus der Beschreibung sowie den Zeichnungen. Konkrete Ausführungsbeispiele der Erfindung sind in den Zeichnungen vereinfacht dargestellt und in der nachfolgenden Beschreibung näher erläutert. Dabei zeigen:
- Fig. 1: eine schematische Darstellung eines Ausschnitts einer Baugruppe, bei welcher zwei Bauteile mit einem elastischen Verbindungselement gemäß der vorliegenden Erfindung verbunden sind;
- Fig. 2: eine schematische Darstellung eines Ausschnitts einer weiteren Baugruppe, bei welcher die Bauteile mit einem elastischen Verbindungselement gemäß der vorliegenden Erfindung verbunden sind;
- Fig. 3: eine schematische Darstellung eines Ausschnitts einer noch weiteren Baugruppe, bei welcher die beiden Bauteile mittels eines Verbindungselements gemäß der vorliegenden Erfindung miteinander verbunden sind;
- Fig. 4: eine Querschnittsdarstellung und eine Draufsicht eines elastischen Verbindungselements gemäß einem ersten Ausführungsbeispiel der vorliegenden Erfindung;
- Fig. 5: eine Querschnittsdarstellung und eine Draufsicht eines Verbindungselements gemäß einem zweiten Ausführungsbeispiel der vorliegenden Erfindung;
- Fig. 6: eine Querschnittsdarstellung und eine Draufsicht eines Verbindungselements gemäß einem dritten Ausführungsbeispiel der vorliegenden Erfindung;
- Fig. 7: eine Querschnittsdarstellung und eine Draufsicht eines Verbindungselements gemäß einem vierten Ausführungsbeispiel der vorliegenden Erfindung; und
- Fig. 8: eine Querschnittsdarstellung und eine Draufsicht eines Verbindungselements gemäß einem fünften Ausführungsbeispiel der vorliegenden Erfindung.

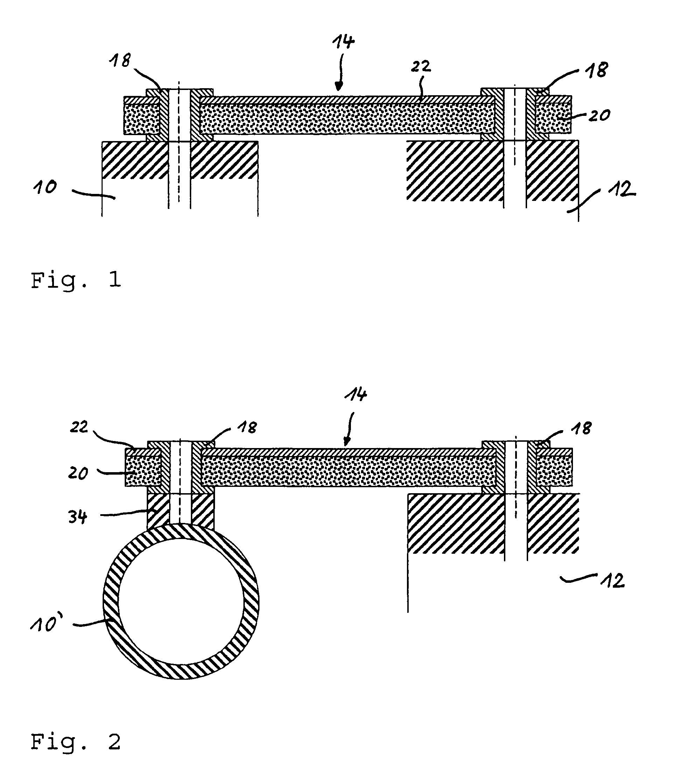

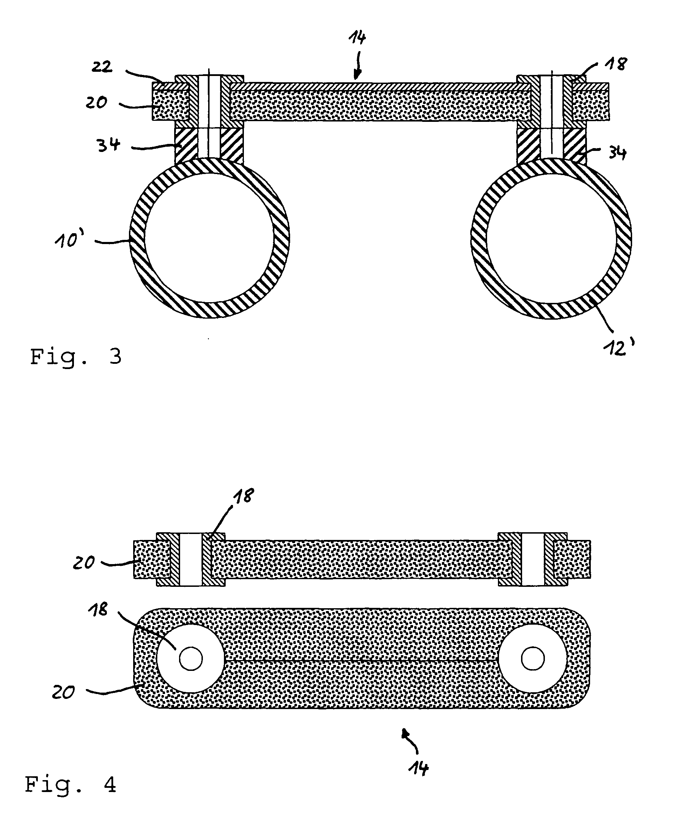

In den Darstellungen der Fig. 1 bis 3 sind ausschnittweise verschiedene Baugruppen eines Motorsystems eines Kraftfahrzeugs dargestellt, bei welchen die Bauteile jeweils durch ein elastisches Verbindungselement gemäß der vorliegenden Erfindung miteinander verbunden sind. Anhand der Fig. 4 bis 8 werden verschiedene Ausführungsbeispiele eines elastischen Verbindungselements gemäß der vorliegenden Erfindung erläutert, die beispielsweise in den Baugruppen der Fig. 1 bis 3 einsetzbar sind.

Fig. 1 zeigt beispielhaft eine Verbindung zwischen einem ersten Bauteil 10, zum Beispiel einem Motorblock, und einem zweiten Bauteil 12, zum Beispiel einer Konsole, eines Motorsystems eines Kraftfahrzeugs. Die beiden Bauteile 10 und 12 sind mittels eines elastischen Verbindungselements 14 miteinander verbunden. Das elastische Verbindungselement 14 weist an seinen beiden Endabschnitten jeweils eine Befestigungsvorrichtung 18 in Form einer Buchse auf, durch welche jeweils ein Befestigungselement, wie beispielsweise eine Schraube, ein Bolzen oder eine Niete hindurch geführt werden kann. Mit der Befestigungsvorrichtung 18 und einem entsprechenden Befestigungselement (nicht dargestellt) wird das Verbindungselement 14 derart an den beiden Bauteilen 10 und 12 befestigt, dass die Richtung der Befestigung des Verbindungselements an die Bauteile (Oben/Unten-Richtung in Fig. 1) im wesentlichen senkrecht zu der Hauptausdehnungsrichtung des Verbindungselements (Links/Rechts-Richtung in Fig. 1) verläuft.

Das elastische Verbindungselement soll einerseits eine elastische Verbindung zwischen den beiden Bauteilen 10 und 12 bewirken und soll andererseits gute Körperschallübertragungseigenschaften aufweisen. Insbesondere bei der Anwendung für ein Motorsystem eines Kraftfahrzeugs ist es außerdem von Vorteil, wenn das elastische Verbindungselement gute Festigkeitseigenschaften (Schwingfestigkeit, Temperaturfestigkeit, Korrosionsbeständigkeit) zeigt. Der Aufbau und die Eigenschaften eines geeigneten elastischen Verbindungselements 14 werden weiter unten anhand der Fig. 4 bis 8 näher beschrieben.

Fig. 2 zeigt einen Ausschnitt einer weiteren Baugruppe, bei welcher zwei Bauteile 10' und 12 mit einem elastischen Verbindungselement 14 gemäß der vorliegenden Erfindung verbunden sind. In dem Ausführungsbeispiel von Fig. 2 ist das erste Bauteil 10' ein Rohr, während das zweite Bauteil 12 wie im ersten Ausführungsbeispiel zum Beispiel ein Motor sein kann. Um die Befestigung des elastischen Verbindungselements 14 an dem Rohr 10' zu vereinfachen, ist zwischen der Befestigungsvorrichtung 18 des Verbindungselements 14 und dem Rohr 10' ein geeignetes Kupplungselement 34 vorgesehen, das einen formschlüssigen Anschluss von Bauteil 10' und Befestigungsvorrichtung 18 erlaubt.

In dem dritten Ausführungsbeispiel von Fig. 3 handelt es sich bei beiden Bauteilen 10' und 12', die durch ein elastisches Verbindungselement 14 gemäß der vorliegenden Erfindung miteinander verbunden sind, um Rohre. Demgemäß sind hier zwei geeignete Kupplungselemente 34 zum formschlüssigen Anschluss der Bauteile 10', 12' und der Befestigungsvorrichtungen 18 des Verbindungselements 14 vorgesehen.

Es werden nun verschiedene bevorzugte Ausführungsbeispiele eines elastischen Verbindungselements 14 gemäß der vorliegenden Erfindung näher erläutert.

Im einfachsten Fall ist das elastische Verbindungselement 14 nur aus einem Metalldrahtgestrick 20 aufgebaut, das in ein Formelement gepresst ist. Das Formelement des Metalldrahtgestrickes 20 besitzt beispielsweise eine balkenartige oder plattenartige Grundform, die sowohl geradlinig als auch gekrümmt ausgewählt sein kann. In dem Formelement des Metalldrahtgestricks 20 sind zwei Buchsen 18 als Befestigungsvorrichtungen integriert, wie in Fig. 4 veranschaulicht.

Im Rahmen der vorliegenden Erfindung soll der Begriff "Gestrick" neben dem Gestrick auch Ausführungsformen wie Gewebe, Geflecht, Gewirk und Vlies umfassen. Das Metalldrahtgestrick 20 kann zum Beispiel aus Stahldrähten gebildet sein.

Ein Metalldrahtgestrick 20 erhöht aufgrund seiner Coulomb' schen Reibung, welche seiner Konstruktion inhärent ist, die Dämpfung zwischen den beiden Bauteilen und verbessert dadurch das Schwingverhalten der gesamten Baugruppe. Außerdem zeigen solche Metalldrahtgestricke eine hohe Temperatur- und Korrosionsfestigkeit, sodass sie auch in der Umgebung eines Kraftfahrzeugmotors vorteilhaft einsetzbar sind. Ferner besitzt das Metalldrahtgestrick auch eine gewisse Elastizität, gewährleistet aber dennoch eine feste Verbindung zwischen den beiden Bauteilen.

Metalldrahtgestricke der hier beschriebenen und verwendeten Art sind aus dem Stand der Technik grundsätzlich bekannt und werden auch bereits in verschiedenen Anwendungsfällen eingesetzt. So offenbaren zum Beispiel die DE 199 18 485 C1 und die EP 0 308 280 B1 verschiedene Verbundwerkstoffe, die im wesentlichen aus einem Metallgestrick aufgebaut sind, um dem Verbundwerkstoff eine hohe Festigkeit und ein hohes Energieabsorptionsvermögen zu verleihen. Spezielle, in der Technik bekannte Anwendungsmöglichkeiten eines Metalldrahtgestricks sind beispielsweise ein Schwingungsabsorber, der an einer körperschallabstrahlenden Struktur angebracht werden kann (DE 298 07 872 U1), ein Profilteil zum thermischen Isolieren von Rohren (DE 41 00 274 A1), ein Dehnungsausgleicher zwischen zwei Strukturen (DE 33 22 671 A1) oder ein elektromagnetisches Abschirmelement (US-A-4,037,009). In keinem dieser Dokumente wird jedoch die Anwendung eines Metalldrahtgestricks für ein elastisches Verbindungselement im Sinne der vorliegenden Erfindung vorgeschlagen.

Das Verbindungselement der vorliegenden Erfindung ist nicht auf spezielle Grundformen, Größen, Drahtstärken oder Maschengrößen des Metalldrahtgestricks beschränkt. Insbesondere können die Drahtstärke und die Maschengröße des Metalldrahtgestricks als Einstellparameter für die gewünschte Dämpfungswirkung des Verbindungselements verwendet werden.

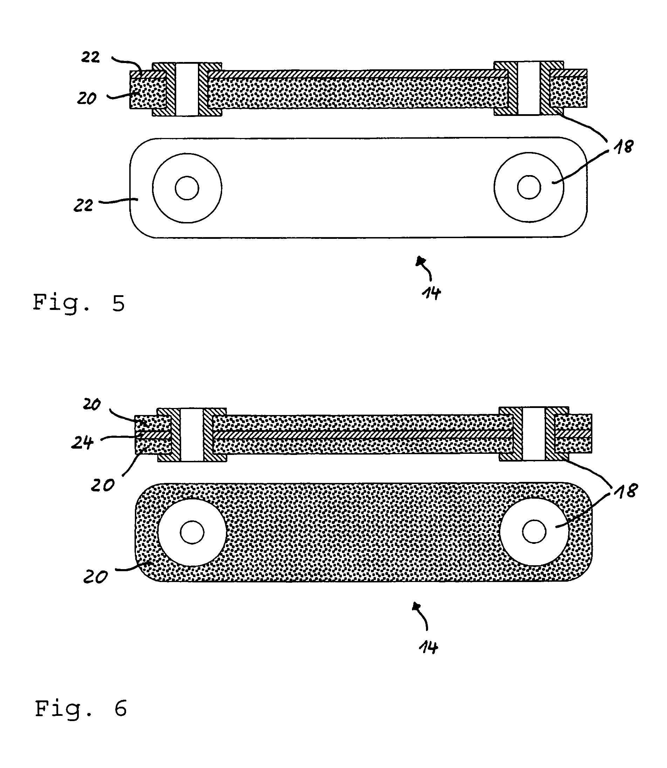

In einem zweiten Ausführungsbeispiel des erfindungsgemäßen Verbindungselements ist das Metalldrahtgestrick 20 einseitig mit einer Deckschicht 22 versehen, wie in Fig. 5 veranschaulicht. Die Deckschicht 22 besteht aus einem metallischen oder nicht-metallischen Material, besonders bevorzugt aus einem elastomeren Material. Mit einer solchen Deckschicht 22 kann das Schwing- und Übertragungsverhalten des Verbindungselements 20 über weite Frequenzbereiche gezielt beeinflusst werden. Ist die Deckschicht 22 aus einem Elastomer aufgebaut, so wird das Dämpfungsverhalten durch Scherung verstärkt.

Obwohl nicht dargestellt, ist es auch möglich, das Metalldrahtgestrick 20 des Verbindungselements 14 beidseitig mit einer Deckschicht 22 der obigen Art zu versehen. In diesem Fall können beide Deckschichten 22 aus metallischen oder nicht-metallischen, insbesondere elastomeren Materialien gebildet sein.

In einem dritten Ausführungsbeispiel der Erfindung, das in Fig. 6 dargestellt ist, ist das Verbindungselement 14 aus zwei Metalldrahtgestricken 20 aufgebaut, zwischen denen eine Einlage 24 zwischengefügt ist. Diese Einlage 24 besteht wieder aus einem metallischen oder nicht-metallischen Material, insbesondere einem elastomeren Material, um die gleichen Vorteile wie bei dem Ausführungsbeispiel von Fig. 5 zu erzielen. Anstelle der Einlage 24 zwischen zwei Metalldrahtgestricken 20 kann auch ein Metalldrahtgestrick mit einer Füllung aus einem entsprechenden Material gefüllt sein.

Die Verbindungselemente 14 des zweiten und des dritten Ausführungsbeispiels sind, wie bei dem Ausführungsbeispiel von Fig. 4, ebenfalls mit Buchsen 18 als Befestigungsvorrichtungen zum Befestigen des Verbindungselements 14 an den Bauteilen 10, 10', 12, 12' versehen.

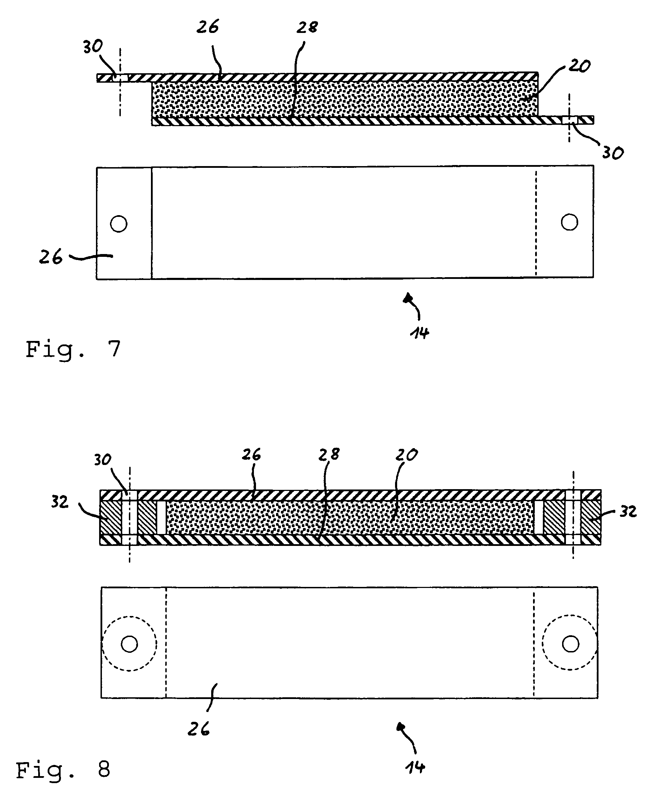

Fig. 7 zeigt ein weiteres Ausführungsbeispiel eines elastischen Verbindungselements 14 der vorliegenden Erfindung. Wie in Fig. 7 veranschaulicht, ist hier das Metalldrahtgestrick 20 zwischen einer oberen tragenden Montageplatte 26 und einer unteren tragenden Montageplatte 28 angeordnet. Während an einem Ende des Verbindungselements 14 die obere Montageplatte 26 das Metalldrahtgestrick 20 und die untere Montageplatte 28 überragt, überragt am abgewandten Ende des Verbindungselements 14 die untere Montageplatte 28 das Metalldrahtgestrick 20 und die obere Montageplatte 26. In den vorstehenden Abschnitten der oberen bzw. der unteren Montageplatte 26, 28 ist jeweils eine Bohrung 30 als Befestigungsvorrichtung der Erfindung vorgesehen. Durch diese Bohrung 30 kann ein entsprechendes Befestigungselement hindurch geführt und in Eingriff mit dem Bauteil bzw. dem Kupplungselement gebracht werden.

Während das Verbindungselement 14 in Fig. 7 nur ein Metalldrahtgestrick 20 zwischen den zwei Montageplatten 26 und 28 aufweist, ist es statt dessen auch möglich, zwischen den zwei Montageplatten 26 und 28 ein Metalldrahtgestrick 20 mit einer oder zwei Deckschichten, mit einer Einlage oder mit einer Füllung entsprechend den oben beschriebenen Ausführungsbeispielen anzuordnen.

Fig. 8 zeigt ein noch weiteres Ausführungsbeispiel eines elastischen Verbindungselements der vorliegenden Erfindung. Wie in dem vorherigen Beispiel von Fig. 7, ist das Metalldrahtgestrick 20 zwischen zwei tragenden Montageplatten 26 und 28 angeordnet. Das Metalldrahtgestrick 20 kann auch hier mit einer Deckschicht, einer Einlage oder einer Füllung kombiniert sein.

Im Gegensatz zu dem vorherigen Ausführungsbeispiel sind hier die beiden tragenden Montageplatten 26 und 28 gleich dimensioniert, d.h. liegen im wesentlichen deckungsgleich übereinander. In den beiden Endabschnitten des Verbindungselements 14 ist jeweils eine Abstandshülse 32 zwischen den zwei tragenden Montageplatten 26 und 28 angeordnet, welche als Befestigungsvorrichtung der Erfindung dient. Die Abstandshülsen 32 weisen eine Durchbohrung auf, welche mit einer entsprechenden Bohrung 30 in den tragenden Montageplatten 26 und 28 fluchtend ausgerichtet ist, sodass ein geeignetes Befestigungselement hindurch geführt und mit dem Bauteil bzw. dem Kupplungselement in Eingriff gebracht werden kann.

Das elastische Verbindungselement 14 der Erfindung kann besonders vorteilhaft zur Verbindung von Motorkomponenten eines Kraftfahrzeugs eingesetzt werden. Das Verbindungselement 14 bewirkt insbesondere eine Reduzierung der Körperschallleitung und damit eine Geräuschminderung, einen Ausgleich von Wärmedehnungen sowie auch eine Erhöhung der Schwingfestigkeit.

## Patentansprüche

1. Elastisches Verbindungselement (14) zum Verbinden von wenigstens zwei Bauteilen (10, 10', 12, 12'), mit jeweils einer Befestigungsvorrichtung (18, 30, 32) zum Befestigen des Verbindungselements an einem der Bauteile,
**dadurch gekennzeichnet,**
**dass** das Verbindungselement (14) aus einem Metalldrahtgestrick (20) aufgebaut ist, das in ein Formelement gepresst ist, wobei die Befestigungsvorrichtungen (18, 30, 32) derart in das Verbindungselement (14) integriert sind, dass die Richtung der Befestigung des Verbindungselements an die Bauteile (10, 10', 12, 12') im wesentlichen senkrecht zu der Hauptausdehnungsrichtung des Verbindungselement verläuft.

2. Verbindungselement nach Anspruch 1,
**dadurch gekennzeichnet,**
**dass** das Formelement eine balkenartige oder plattenartige Grundform besitzt.

3. Verbindungselement nach Anspruch 1 oder 2,
**dadurch gekennzeichnet,**
**dass** das Metalldrahtgestrick (20) einseitig oder beidseitig mit einer Deckschicht (22) aus einem metallischen oder nicht-metallischen Material versehen ist.

4. Verbindungselement nach Anspruch 1 oder 2,
**dadurch gekennzeichnet,**
**dass** zwei Metalldrahtgestricke (20) vorgesehen sind, zwischen denen eine Einlage (24) vorgesehen ist, oder das Metalldrahtgestrick (20) mit einer Füllung versehen ist, wobei die Einlage bzw. die Füllung aus einem metallischen oder nicht-metallischen Material besteht.

5. Verbindungselement nach Anspruch 3 oder 4,
**dadurch gekennzeichnet,**
**dass** das nicht-metallische Material der Deckschicht (22) bzw. der Einlage (24) oder der Füllung ein elastomeres Material ist.

6. Verbindungselement nach einem der vorhergehenden Ansprüche,
**dadurch gekennzeichnet,**
**dass** das Metalldrahtgestrick (20) einseitig oder beidseitig mit einer tragenden Montageplatte (26, 28) verbunden ist.

7. Verbindungselement nach einem der vorhergehenden Ansprüche,
**dadurch gekennzeichnet,**
**dass** die Befestigungsvorrichtungen (18, 30, 32) Buchsen, Hülsen oder Durchbohrungen sind, durch welche ein Befestigungselement zum Eingriff mit dem Bauteil (10, 10', 12, 12') hindurch geführt werden kann.

8. Anordnung aus wenigstens zwei Bauteilen (10, 10', 12, 12'), die miteinander verbunden sind,
**dadurch gekennzeichnet,**
**dass** die wenigstens zwei Bauteile (10, 10', 12, 12') über ein elastisches Verbindungselement (14) nach einem der Ansprüche 1 bis 7 miteinander verbunden sind.

9. Anordnung nach Anspruch 8,
**dadurch gekennzeichnet,**
**dass** die Bauteile (10, 10', 12, 12') Bauteile eines Motorsystems eines Kraftfahrzeugs sind.

10. Anordnung nach Anspruch 8 oder 9,
**dadurch gekennzeichnet,**
**dass** zwischen dem Bauteil (10', 12') und dem Verbindungselement (14) ein Kupplungselement (34) zum formschlüssigen Anschluss von Bauteil und Verbindungselement vorgesehen ist.
